# EUROPÄISCHE PATENTSCHRIFT

(11) **EP 2 421 724 B1**
(45) Veröffentlichungstag und Bekanntmachung des Hinweises auf die Patenterteilung: **22.11.2017**
(21) Anmeldenummer: 10715214.2
(22) Anmeldetag: 19.04.2010
(51) Int. Cl.: B60R 11/04, B60S 1/08, C03C 27/10, B32B 17/10

(54) **FAHRZEUGVERGLASUNG, VERFAHREN ZU DESSEN HERSTELLUNG UND VERWENDUNG**
AUTOMOTIVE GLAZING, PROCESS FOR ITS PRODUCTION AND USE
VITRAGE DE VEHICULE, PROCÉDÉ POUR SA FABRICATION ET SON UTILISATION

(30) Priorität: 23.04.2009 DE 102009018348
(43) Veröffentlichungstag der Anmeldung: 29.02.2012
(73) Patentinhaber: Saint-Gobain Glass France, 92400 Courbevoie (FR)
(72) Erfinder: TIMMERMANN, Alwin, 50933 Köln (DE)
(74) Vertreter: Lendvai, Tomas
(86) Internationale Anmeldenummer: PCT/EP2010/055093
(87) Internationale Veröffentlichungsnummer: WO 2010/121982

(56) Entgegenhaltungen:
- EP-A1- 1 389 565
- WO-A2-2009/018907
- DE-A1- 10 012 976
- DE-A1- 10 160 669
- DE-A1- 10 342 837
- DE-A1- 19 947 680
- DE-A1-102004 016 517
- DE-C1- 4 124 766
- GB-A- 2 064 506

## Beschreibung

Die vorliegende Erfindung betrifft eine neue Fahrzeugverglasung mit einem optischen Kopplungselement zur Transmission von elektromagnetischer Strahlung, insbesondere von Bildinformationen im sichtbaren Wellenlängenbereich.

Außerdem betrifft die vorliegende Erfindung ein neues Verfahren zur Herstellung einer Fahrzeugverglasung mit einem optischen Kopplungselement.

Außerdem betrifft die vorliegende Erfindung die Verwendung der Fahrzeugverglasung in Fahrzeugen mit einem Fahrerassistenzsystem.

In der DE 10 2007 054 0 47 A1 ist eine Verbundglasscheibe für ein Fahrzeug beschrieben, wobei die Verbundglasscheibe wenigstens eine äußere Glasscheibe und eine innere Glasscheibe umfasst, die dadurch gekennzeichnet ist, dass die innere Glasscheibe und die äußere Glasscheibe unterschiedliche optische Eigenschaften aufweisen und die innere Glasscheibe wenigstens einen Einschnitt oder Ausschnitt aufweist. Die Verbundglasscheibe kann somit in verschiedenen Bereichen ihrer Oberfläche unterschiedliche optische Transmissionseigenschaften aufweisen.

In der DE 10 2006 027 044 A1 ist ein optisches Mittel offenbart, insbesondere ein Prismen- oder Spiegelsystem für einen Bildaufnehmer in einem Kraftfahrzeug, wobei das optische Mittel die Blickrichtung des Bildaufnehmers in einen vorgegebenen Raumwinkelbereich umlenkt. Das optische Mittel wird bevorzugt im Bereich der Außenspiegel angebracht.

Aus der DE 100 54 307 A1 ist ein Lichteinkopplungselement zur Herabsetzung von Reflektionen bei der Einkopplung eines Lichtstrahlenbündels in eine lichtdurchlässige Scheibe bekannt, wobei das Strahlenbündel nicht-senkrecht auf die Scheibe auftritt und das Lichtkopplungselement annährend den Brechungsindex der Scheibe aufweist und formschlüssig an der Scheibe angeordnet ist. Das Lichtkopplungselement weist eine Lichteintrittsfläche auf, welche zumindest im Auftreffpunkt der Hauptachse des Strahlenbündels annäherungsweise senkrecht steht.

DE 10 2006 039 065 A1 offenbart eine Befestigungsvorrichtung für einen optischen Sensor an einer Fahrzeugscheibe.

DE 10 2007 054 047 A1 offenbart eine Verbundglasscheibe für ein Fahrzeug mit einer wärmedämmenden Schicht auf der Oberfläche. Die wärmedämmenden Schicht weist im Bereich eines Funktionselements einem Einschnitt auf.

Die bekannten optischen Koppelelemente transmittieren elektromagnetische Strahlungsbündel aufgrund unterschiedlich langer Laufwege des Lichts im optisch dichten Körper optisch verzerrt, insbesondere bei der Transmission von Bildinformationen. Die Bildinformationen müssen mit erheblichen Aufwand an Rechenleistung korrigiert werden. Außerdem ist eine vergleichsweise große Fläche der Verglasung für die Transmission von Bildern in den Innenraum nötig, insbesondere bei horizontal blickenden Bildaufnehmern und bei stark von der Vertikalen abweichenden Einbauwinkel von Fahrzeugverglasungen. Diese Fläche steht dann als Nutzfläche, beispielsweise für das Sichtfeld B nach ECE-R 43, nicht mehr zur Verfügung.

Der vorliegenden Erfindung liegt die Aufgabe zugrunde, eine Fahrzeugverglasung zu finden, bei der elektromagnetische Strahlungsbündel eines Sender- und / oder Empfängers derart durch die Fahrzeugverglasung transmittiert werden, dass eine möglichst geringe Fläche der Fahrzeugverglasung benötigt wird und die optische Verzerrung, insbesondere von Bildinformationen, möglichst gering ist.

Außerdem liegt der vorliegenden Erfindung die Aufgabe zu Grunde, ein neues Verfahren zur Herstellung einer Fahrzeugverglasung zu finden.

Außerdem liegt der vorliegenden Erfindung die Aufgabe zu Grunde, eine neue Verwendung für eine Fahrzeugverglasung zu finden.

Die Aufgabe wird durch eine Fahrzeugverglasung gelöst, die mindestens umfasst:
a) eine transparente Scheibe,
b) einen transparenten Körper,
c) dazwischen liegend mindestens eine transparente Polymerschicht,
wobei der transparente Körper über mindestens eine Koppelfläche mit der transparenten Scheibe über die transparente Polymerschicht formschlüssig verbunden ist und die maximale Breite und die maximale Länge des transparenten Körpers kleiner ist als die minimale Breite und die minimale Länge der transparenten Scheibe und eine Transmissionsfläche des transparenten Körpers und die Fläche der transparenten Scheibe parallel mit maximalen Winkelabweichungen kleiner 10 ° verlaufen.

Der Weg eines elektromagnetischen Strahlenbündels, insbesondere einer Bildinformation, ist in der optisch dichten transparenten Scheibe und im optisch dichten transparenten Körper in etwa gleich aufgrund des parallelen Verlaufs der Fläche der transparenten Scheibe und der Transmissionsfläche des transparenten Körpers als optisches Kopplungselement. Ein Bild betrachtet durch die transparente Scheibe und den transparenten Körper erscheint nicht oder kaum verzerrt. Gleichzeitig verkürzt sich die Distanz zwischen der Transmissionsfläche des transparenten Körpers und den Öffnungen des Senders und / oder des Empfängers. Das Strahlungsbündel kann sich durch die kurze Distanz weniger stark aufweiten. Dadurch wird die für den Sender und/oder Empfänger benötigte Fläche zur Transmission des Strahlenbündels verringert, insbesondere bei horizontal blickenden Bildaufnehmern mit stark von der Vertikalen abweichendem Einbauwinkeln von Fahrzeugverglasungen.

In einer bevorzugten Ausführungsform verlaufen die Transmissionsfläche des transparenten Körpers und die Fläche der transparenten Scheibe, parallel mit Winkelabweichungen unterhalb von 2°. Je höher die Parallelität der Transmissionsfläche und der Fläche der transparenten Scheibe ist, desto geringer ist die optische Verzerrung eines Strahlenbündels.

In einer weiteren bevorzugten Ausführungsform weist der transparente Körper eine maximale Breite von bevorzugt 5 mm bis 100 mm auf.

Die Koppelfläche und die Transmissionsfläche des transparenten Körpers sind bevorzugt als Trapeze ausgeführt. Je stärker die Blickrichtung des Senders und / oder Empfängers auf die transparente Scheibe von der Vertikalen der Fläche der transparenten Scheibe abweicht, desto stärker ausgeprägt ist die Trapezform. Bereiche, die sich näher an der Öffnung des Senders und / oder Empfängers befinden, können schmäler ausgeführt sein, da sich das Strahlenbündel zwischen der Öffnung des Senders / und oder Empfängers und dem transparenten Körper nur geringfügig aufweiten kann. Entsprechend nimmt in einer Ausführungsform die Breite des transparenten Körpers zum oberen Rand der transparenten Scheibe ab.

In einer bevorzugten Ausführungsform beträgt die Länge des transparenten Körpers 10 mm bis 200 mm.

Die Dicke des transparenten Körpers beträgt bevorzugt 2 mm bis 25 mm.

Der transparente Körper enthält bevorzugt Sililkatglas, Polymethylmethacrylat, Polycarbonat, Cyclo-Olefin-Polymere, Polysulfone, Polyurethan, Polypropylen, Polystyrol, Polyamid, Polyester und / oder Polyvinylchlorid, sowie Copolymere und / oder Kombinationen davon. Insgesamt kommen sämtliche Materialien in Betracht, die für elektromagnetische Strahlungsbündel der Sender und / oder Empfänger transparent sind. Für Bildaufnehmer ist eine hohe Transparenz für elektromagnetische Strahlung im sichtbaren Bereich (380 nm bis 750 nm) und / oder nahen Infrarot (750 nm bis 1200 nm) bevorzugt.

Der transparente Körper weist eine Lichttransmission im Wellenlängenbereich von 380 nm bis 750 nm von bevorzugt größer 70 % auf.

Der transparente Körper kann bevorzugt eine Transmission von Infrarotstrahlung kleiner 50% aufweisen, um eingehende Strahlung ohne nutzbare Information in den Empfänger zu minimieren.

Ein Sender beinhaltet eine Öffnung zur Aussendung elektromagnetischer Strahlung, insbesondere Strahlungsbündel. Die elektromagnetische Strahlung und insbesondere der Strahlungsbündel, können nach Wechselwirkung mit der Materie wieder reflektiert und über eine Öffnung am Empfänger detektiert werden. Aus dem Signal können anhand von Phasenverschiebungen und Laufzeitmessungen Informationen zum Abstand zwischen Objekten und Fahrzeug, Oberflächenbeschaffenheit von Objekten und Temperaturen in der Umgebung von Fahrzeugen berechnet werden. Bei Bildaufnehmern im sichtbaren oder infraroten Bereich ist oftmals kein Sender notwendig, sondern es werden lediglich Signale aus der Umgebung aufgenommen. Die Quelle der elektromagnetischen Strahlung kann von externen Sendern resultieren. Insgesamt kommt das Senden und Empfangen sämtlicher elektromagnetischer Strahlung in Betracht, die für Fahrer und Fahrerassistenzsysteme zum Betreiben eines Fahrzeugs von Interesse sind.

Fahrerassistenzsysteme benötigen bevorzugt Bildinformationen aus der Umgebung. Andere Verkehrsteilnehmer, Hindernisse, Verkehrschilder und Fahrbahnmarkierungen können erkannt werden. Durch ein rechnergestütztes Auswertesystem wird der Fahrer aktiv oder passiv beim Betreiben des Fahrzeugs unterstützt. Ein Fahrzeug kann durch diese Informationen bei entsprechender Ausgestaltung auch autonom betrieben werden.

Streulicht ist der Anteil elektromagnetischer Strahlung, welcher von der transparenten Scheibe, dem transparenten Körper oder anderen Komponenten der Fahrzeugverglasung oder Umgebung nicht direkt transmittiert oder reflektiert wird. Dieses Streulicht enthält keine oder nur eine geringe verwertbare Information und wird im Empfänger dem nutzbaren Signal überlagert. Streulicht verringert die Empfindlichkeit des Empfängers. Durch eine lichtabsorbierende Beschichtung an Seitenflächen des transparenten Körpers, die nicht direkt im Strahlengang liegen, kann Streulicht absorbiert werden. Es kommen für die lichtabsorbierende Schicht bevorzugt geschwärzte polymerhaltige Farben in Betracht, die nach chemischer Reaktion oder Verdampfung eines Lösungsmittels mechanisch und chemisch stabil sind.

In einer Ausführungsform weist der transparente Körper an mindestens einer Seitenfläche lichtabsorbierende Teile auf. Die Teile enthalten Polyacryl, Polyurethan, Polypropylen, Polystyrol, Polyamid, Polyester, Polyvinylchlorid, Polycarbonat und / oder Polymethylmethacrylat, sowie Copolymere und / oder Kombinationen davon. Die lichtabsorbierenden Teile können den transparenten Körper und Bereiche außerhalb des direkten Weges des elektromagnetischen Strahlungsbündels zwischen Sender und/oder Empfänger ganz oder teilweise umschließen. In einer Wirkung wird störendes Streulicht minimiert. Die lichtabsorbierenden Teile können als Streulichtblenden bezeichnet werden.

In einer weiteren bevorzugten Ausgestaltung weist die Form der lichtabsorbierenden Teile und / oder der transparente Körper schiefen Ebenen, Öffnungen, Erhöhungen und / oder Gewinde zur Positionierung und Montage von elektromagnetischen Sender- oder Empfangssystemen. Diese Ausgestaltung der Erfindung hat insbesondere den Vorteil, das Sender und / oder Empfänger definiert zur transparenten Scheibe und zum transparenten Körper positioniert sind.

In einer weiteren Ausgestaltung der Erfindung kann der transparente Körper an den Seitenflächen ganz oder teilweise schiefe Ebenen, konkave, konvexe Formen und / oder optische Elemente aufweisen, die zur Einkopplung R_e und Auskopplung R_a von zusätzlichen elektromagnetischen Sensorsignalen an Seitenflächen dienen, beispielsweise für Regendetektionssysteme.

Bei Regendetektionssystemen wird ein über die Seitenflächen eingekoppeltes Signal von Feuchtigkeit auf der Oberfläche der transparenten Scheibe verändert und als ausgehendes Signal detektiert. Aus dem ausgehenden Signal kann über entsprechende Berechnungen auf die Feuchtigkeitsmenge rückgeschlossen werden.

Um optische Reflektionsverluste an elektromagnetischer Strahlung an der Transmissionsfläche des transparenten Körpers zu minimieren enthält der transparente Körper in einer bevorzugten Ausführungsform mindestens eine Entspiegelungsschicht.

Entspiegelung ist die Minimierung der Reflektionsverluste elektromagnetischer Strahlung an Grenzflächen von Medien unterschiedlicher optischer Dichte. Ein Körper oder ein Medium sind optisch dicht, wenn sie eine Brechzahl größer als Luft aufweisen. Die Brechzahl von Luft ist etwa 1.

Entspiegelung von Oberflächen kann durch unterschiedliche Maßnahmen realisiert werden. Bei interferenzoptischen Schichtsystemen wird über eine Beschichtung der Glasoberfläche mit zwei bis mehreren dünnen Schichten unterschiedlicher Brechzahl ein Teil der reflektierten Strahlung über destruktive Interferenz ausgelöscht. Alternativ kann die Entspiegelung durch ein Einschichtsystem erfolgen wenn deren Brechzahl ungefähr der mathematischen Wurzel der Brechzahl des darunterliegenden Materials entspricht. Schichten beinhalten insbesondere Silizium-Nitrid und Silizium-Oxid sowie alle üblichen transparenten Metall-Nitride und / oder Gemische davon.

Mindestens eine weitere Beschichtung auf der Transmissionsfläche oder Koppelfläche des transparenten Körpers enthält leitfähige, transparente Schichten enthaltend Silber, Zinnoxid, Zinkoxid, Indium-Zinn-Oxid und / oder Gemische davon. Über einen elektrischen Stromfluß kann in einer Ausführungsform der Erfindung durch Joulesche Wärme der transparente Körper beheizt werden, um insbesondere bei niedrigen Außentemperaturen Feuchtigkeitsbeschlag auf dem transparenten Körper zu minimieren. Der Feuchtigkeitsbeschlag würde durch Absorption und / oder erhöhte Streuung die Leistung der Sender und Empfindlichkeit der Empfänger reduzieren.

Die transparente Scheibe enthält bevorzugt Silikatglas, Polystyrol, Polyamid, Polyester, Polyvinylchlorid, Polycarbonat, Ethylen-Vinyl-Acetate, plastizitierte Polyvinyl-Butyrale, Polyurethane, Ionomere und / oder Polymethylmethacrylat, sowie Copolymere und / oder Kombinationen davon. Die transparente Scheibe ist besonders bevorzugt als Verbundglasscheibe ausgestaltet.

In einer weiteren bevorzugten Ausführungsform enthält die transparente Scheibe mindestens auf Teilbereichen eine lichtundurchlässige Beschichtung mit Abdeckfarbe. Die lichtundurchlässige Abdeckfarbe begrenzt ganz oder teilweise die Fläche zur Transmission elektromagnetischer Strahlung um beispielsweise störende Montageelement der Sender und / oder Empfänger abzudecken.

Zur Erhöhung der mechanischen Stabilität ist die transparente Scheibe in einer bevorzugten Ausgestaltung in Längs- und / oder Querrichtung gekrümmt.

Längsrichtung ist die Richtung etwa entlang der Blickrichtung des Senders und / oder des Empfängers. Die Längenangaben beziehen sich auf diese Richtung. Entsprechend beziehen sich die Breitenangaben auf die Querrichtung.

Bei stark gekrümmten transparenten Scheiben ist auch der transparente Körper in Längs- und / oder Querrichtung formschlüssig gekrümmt.

Die transparente Polymerschicht enthält bevorzugt Polyacrylat, Polyurethan, Polypropylen, Polystyrol, Polyamid, Polyester, Polyvinylchlorid, Polycarbonat, Polymethylmethacrylat, Ethylen-Vinyl-Acetate, plastizitierte Polyvinyl-Butyrale, Polyurethane, Polyacrylate, Ionomere sowie Copolymere und/oder Kombinationen davon enthält. Als Polymerschicht wird beispielsweise das acrylbasierte Klebesystem VHB™ der Gesellschaft 3M Deutschland GmbH, Neuss verwendet.

In einer bevorzugten Ausgestaltung der Fahrzeugverglasung ist die transparente Polymerschicht 0,5 mm bis 2 mm, bevorzugt 1,00 mm bis 1,5 mm dick.

Im erfindungsgemäßen Verfahren zur Herstellung einer Fahrzeugverglasung wird eine transparente Scheibe mit einer lichtundurchlässigen Abdeckfarbe teilweise beschichtet. Ein transparenter Körper und eine auf der Kontaktfläche aufgebrachte transparente Polymerschicht werden vorgewärmt und an den transparenten Körpern mit der transparenten Polymerschicht wird unter einer Vakuumglocke Vakuum angelegt. Der transparente Körper mit der transparenten Polymerschicht wird auf der transparenten Scheibe an der lichtundurchlässigen Abdeckfarbe ausgerichtet und abrollend aufgeklebt. Die Vorwärmung wird bevorzugt im Temperaturbereich von 30 °C bis 70 °C durchgeführt.

In einer Ausführungsform des Verfahrens wird in einem vorangehenden Verfahrenschritt die transparente Scheibe aus zwei transparenten Scheiben und Polymer in einem Autoklav-Prozess verbunden.

Die lichtundurchlässige Abdeckfarbe kann in einem Siebdruckverfahren, bevorzugt auf der Innenfläche der transparenten Einzelscheiben, vor dem Verbundprozess oder auf der Außenfläche der transparenten Scheibe aufgebracht werden.

Es wurde auch unerwartet und überraschend die neue Verwendung der Fahrzeugverglasung als Windschutzscheibe zur Transmission von elektromagnetischer Strahlung und für die Montage von Fahrerassistenzsystemen gefunden.

Ein Ausführungsbeispiel der Erfindung ist in der Zeichnung dargestellt und wird im Folgenden näher beschrieben.

Es zeigen,
Figur 1 einen Querschnitt durch eine Fahrzeugverglasung und einen Bildaufnehmer gemäß dem Stand der Technik,
Figur 2 einen Querschnitt durch eine erfindungsgemäße Fahrzeugverglasung und einen Bildaufnehmer,
Figur 3 eine Draufsicht auf eine erfindungsgemäße Fahrzeugverglasung,
Figur 4 einen Querschnitt durch die Linie A-A in Fig. 3,
Figur 5 einen Querschnitt durch eine erfindungsgemäße Fahrzeugverglasung,
Figur 6 eine Draufsicht auf den transparenten Körper,
Figur 7 ein Ausführungsbeispiel des erfindungsgemäßen Verfahrens zur Herstellung der erfindungsgemäßen Fahrzeugverglasung in einem Fließdiagramm.

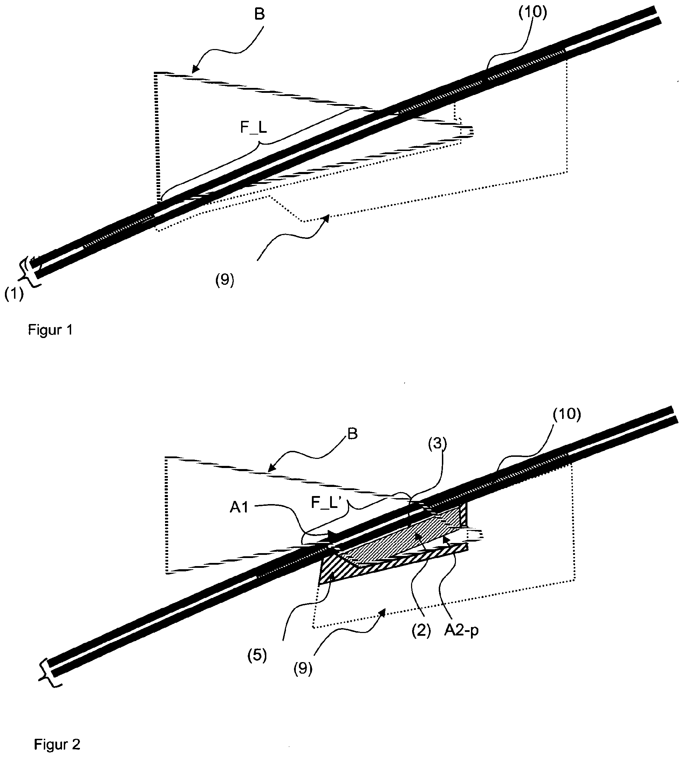

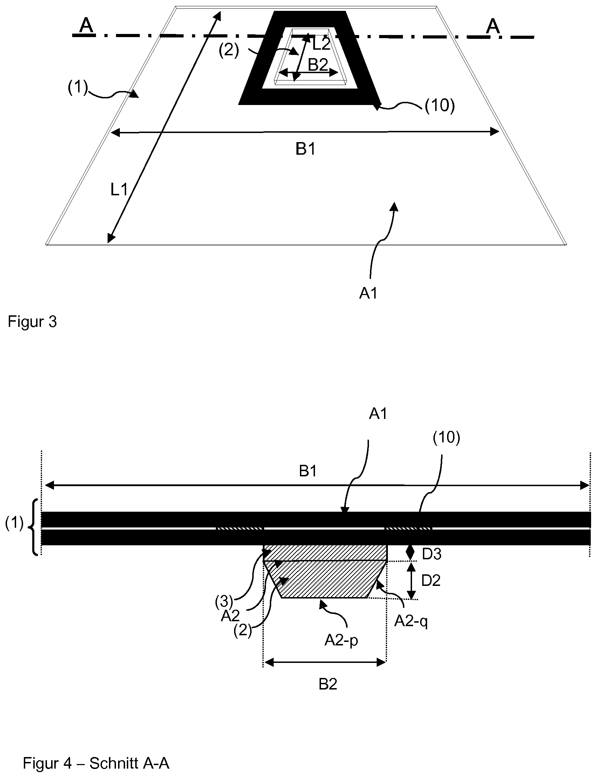

Bei den Figuren 1 bis 6 handelt es sich um schematische Darstellungen, die das Prinzip der Erfindung veranschaulichen sollen. Die schematischen Darstellungen brauchen daher nicht maßstabsgetreu zu sein.

In einem Vergleichsbeispiel nach Figur 1 gemäß dem Stand der Technik wurde auf der Innenraumseite einer Verbundglas-Windschutzscheibe (1) ein Bildaufnehmer (9) mit etwa horizontalem Blick Richtung Verbundglas-Windschutzscheibe (1) montiert. Es wurde der resultierende Weg des elektromagnetischen Strahlenbündels (B) bei Transmission durch die Verbundglas-Windschutzscheibe (1) betrachtet. Die Verbundglas-Windschutzscheibe (1) wies eine lichtundurchlässige Umrahmung des Transmissionsbereichs mit Abdeckfarbe (10) auf.

Die Länge L1 der gekrümmten transparenten Scheibe (1) betrug 1 m, die maximale Breite B1 1,5 m. Die Verbundglas-Windschutzscheibe (1) hatte einen Einbauwinkel in einem Fahrzeug von 23 ° zwischen der transparenten Scheibe und der Horizontalen.

Das elektromagnetische Strahlungsbündel (B) durch die transparente Scheibe (1) und den transparenten Körper (2) wurde nicht oder kaum verzerrt abgebildet. Die für die Transmission des kompletten Bildes notwendige Länge der Fläche F_L durch die transparente Scheibe (1) betrug 67 mm.

Das Ausführungsbeispiel nach den Figuren 2 bis 4 bestand aus einer Verbundglas-Windschutzscheibe als transparenter Scheibe (1) und einem transparenten Körper (2) mit Polycarbonat. In Figur 2 wird der resultierende Weg des elektromagnetischen Strahlenbündels (B) bei Transmission durch die transparente Scheibe (1), die transparente Polymerschicht (3) und den transparenten Körper (2) dargestellt. Figur 2 zeigt die Länge der Fläche zur Transmission elektromagnetischer Strahlung F-L' bei der erfindungsgemäßen Verglasung. Ebenso dargestellt ist das Strahlungsbündel (B) und die Transmissionsfläche des transparenten Körpers A2-p. Die Fläche A1 dargestellt in Figuren 2, 3 und 4 der transparenten Scheibe (1) und die Transmissionsfläche A2-p des transparenten Körpers (2) waren parallel mit einer Winkelabweichung kleiner 2° formschlüssig über die Koppelfläche A2 verbunden. Die transparente Verbundglas-Windschutzscheibe (1) und entsprechend der transparente Körper (2) hatten einen Einbauwinkel von 23 ° zwischen der transparenten Scheibe (1) und der Horizontalen. Die Länge L1 der gekrümmten transparenten Scheibe (1) betrug 1 m, die Breite B1 betrug 1,5 m. Die Verbundglas-Windschutzscheibe (1) wies eine lichtundurchlässige Umrahmung des Transmissionsbereichs mit Abdeckfarbe (10) auf. Die Länge L2 des transparenten Körpers (2) betrug 5 cm, die maximale Breite B2 betrug 5 cm, die Dicke D2 betrug 7,5 mm. Die Polymerschicht (3) war eine selbstklebende acrylathaltige hochtransparente Folie 3M VHB™ 4905 mit einer Dicke D3 von 0,5 mm. Zur Charakterisierung wurde auf der Fahrgastraumseite ein Bildaufnehmer (9) mit in etwa horizontaler Blickrichtung montiert. Zur Montage des Bildaufnehmers und Minimierung der Lichtstreuung wurden lichtabsorbierende Teile (5) mit Polycarbonat verwendet.

Das elektromagnetische Strahlungsbündel (B) durch die transparente Scheibe (1) und den transparenten Körper (2) wurde nicht oder kaum verzerrt abgebildet. Die für die Transmission des kompletten Bildes notwendige Länge der Fläche F_L' durch die transparente Scheibe (1) betrug 37 mm.

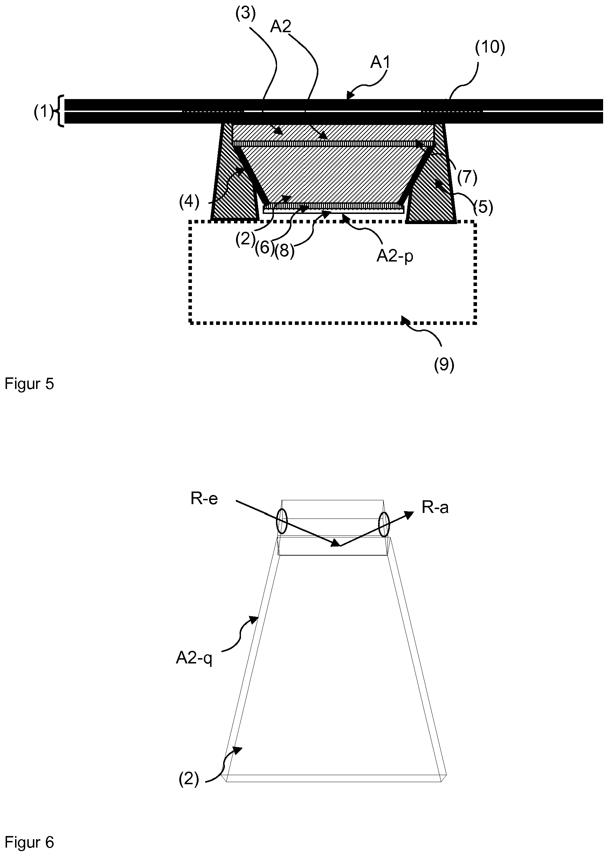

Figur 5 zeigt einen Querschnitt durch die erfindungsgemäße Fahrzeugverglasung, enthaltend die transparente Scheibe (1), Positionierungs- und Montagevorrichtung (5) für ein Sende und/oder Empfangssystem (9), lichtabsorbierende Beschichtungen (4), leitfähige transparente Schichten (6), (7) auf der Transmissionsfläche A2-p und Koppelfläche A2, und eine Entspiegelungsschicht (8) auf der Transmissionsfläche A2-p.

Figur 6 zeigt eine Aufsicht auf den transparenten Körper (2) unter Berücksichtigung der Integration eines Regendetektionsystems mit einem gekoppelten Signal R-e und einem ausgekoppelten Signal R-a in einem Teilbereich des transparenten Körpers (2).

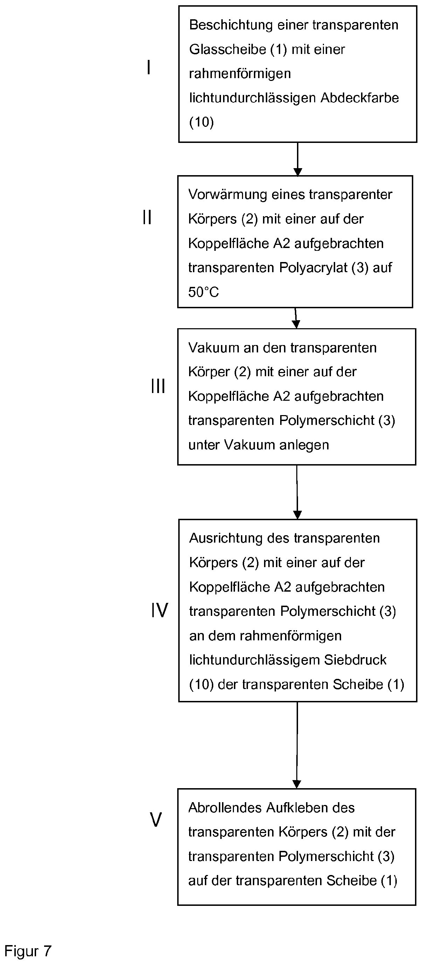

Figur 7 zeigt ein Ausführungsbeispiel des erfindungsgemäßen Verfahrens zur Herstellung der erfindungsgemäßen Fahrzeugverglasung in einem Fließdiagramm. Die dargestellten fünf Stufen des Verfahrens sind eine bevorzugte Ausgestaltung des erfindungsgemäßen Verfahrens.

Die Ergebnisse aus dem Vergleichsbeispiel (Fig. 1) und dem Ausführungsbeispiel (Fig. 2) sind in der Tabelle 1 dargestellt.

**Tabelle 1**

| Beispiel | Einbauwinkel der Verglasung [°] | Länge der benötigen Fläche zur Transmission des Bildes B | |
|---|---|---|---|
| | | Bezug | [mm] |
| Vergleichsbeispiel Fig. 1 | 23 | F-L | 67 |
| Ausführungsbeispiel Fig. 2 | 23 | F-L' | 37 |

Die für die Transmission des kompletten Bildes B notwendige Länge der Fläche F_L' durch die transparente Scheibe (1) betrug lediglich 37 mm und war gegenüber dem Vergleichsbeispiel um 30 mm reduziert. Der Vorteil liegt darin, dass eine möglichst geringe Fläche der Fahrzeugverglasung benötigt wird für die unverzerrte Transmission von elektromagnetischen Strahlungsbündeln von Sendern und Empfängern von Fahrassistenzsystemen.

### Bezugszeichenliste

(1) Transparente Scheibe,
(2) Transparenter Körper,
(3) Polymerschicht,
(4) Lichtabsorbierende Beschichtung,
(5) Lichtabsorbierende Teile,
(6) Leitfähige transparente Beschichtung,
(7) Leitfähige transparente Beschichtung,
(8) Entspiegelungsschicht,
(9) Sende- und / oder Empfangssystem,
(10) Lichtundurchlässige Abdeckfarbe
A1 Außenfläche der transparenten Scheibe (1),
A2 Koppelfläche des transparenten Körpers (2),
A2-p Transmissionsfläche des transparenten Körpers (2) parallel zur Außenfläche A1 der transparenten Scheibe (1),
A2-q Seitenfläche des transparenten Körpers (2),
L1 Länge der transparenten Scheibe (1),
B1 Breite der transparenten Scheibe (1),
L2 Länge des transparenten Körpers (2),
B2 Maximale Breite des transparenten Körpers (2),
D2 Dicke des transparenten Körpers (2),
D3 Dicke der Polymerschicht (3),
B Strahlungsbündel durch eine Verglasung,
F_L Länge der Fläche zur Transmission elektromagnetischer Strahlung,
F_L' Länge der Fläche zur Transmission elektromagnetischer Strahlung bei der erfindungsgemäßen Verglasung,
R-e Eingekoppeltes Signal
R-a Ausgekoppeltes Signal.

## Patentansprüche

1. Fahrzeugverglasung, umfassend mindestens:
a) mindestens eine transparente Scheibe (1),
b) einen transparenten Körper (2),
c) dazwischen liegend mindestens eine transparente Polymerschicht (3),
wobei der transparente Körper (2) über mindestens eine Koppelfläche A2 mit der transparenten Scheibe (1) über die transparente Polymerschicht (3) formschlüssig verbunden ist und die maximale Breite B2 und die maximale Länge L2 des transparenten Körpers (2) kleiner ist als die minimale Breite B1 und die minimale Länge L1 der transparenten Scheibe (1) und eine Transmissionsfläche A2-p des transparenten Körpers (2) und die Fläche A1 der transparenten Scheibe (1), parallel mit maximalen Winkelabweichungen kleiner 10° verlaufen und wobei der transparente Körper (2) Polycarbonat enthält.

2. Fahrzeugverglasung nach Anspruch 1, wobei die Transmissionsfläche A2-p des transparenten Körpers (2) und die Fläche A1 der transparenten Scheibe (1) parallel mit maximalen Winkelabweichungen kleiner 2° verlaufen.

3. Fahrzeugverglasung nach Anspruch 1 oder 2, wobei der transparente Körper (2) eine maximale Breite B2 von 5 mm bis 100 mm aufweist.

4. Fahrzeugverglasung nach einem der Ansprüche 1 bis 3, wobei die Koppelfläche A2 und Transmissionsfläche A2-p des transparenten Körpers Trapeze sind.

5. Fahrzeugverglasung nach einem der Ansprüche 1 bis 4, wobei der transparente Körper (2) eine Länge L2 von 10 mm bis 200 mm und/oder eine Dicke D2 von 2 mm bis 25 mm aufweist.

6. Fahrzeugverglasung nach einem der Ansprüche 1 bis 5, wobei mindestens an eine Seitenfläche A2-q des transparenten Körpers (2) eine lichtabsorbierende Schicht (4) aufweist.

7. Fahrzeugverglasung nach einem der Ansprüche 1 bis 6, wobei der transparente Körper (2) an mindestens einer Seitenfläche lichtabsorbierende Teile (5) aufweist und die lichtabsorbierenden Teile (5) schiefe Ebenen, Öffnungen, Erhöhungen und / oder Gewinde zur Positionierung und Montage von elektromagnetischen Sender- oder Empfangssystemen enthalten.

8. Fahrzeugverglasung nach einem der Ansprüche 1 bis 7, wobei der transparente Körper (2) in einem Teilbereich schiefe Ebenen, konkave und / oder konvexe Krümmungen zur Einkopplung R_e und Auskopplung R_a von elektromagnetischen Sensorsignalen an Seitenflächen A2-q aufweist.

9. Fahrzeugverglasung nach einem der Ansprüche 1 bis 8, wobei die Transmissionsfläche A2-p des transparenten Körpers (2) mindestens eine Entspiegelungsschicht (8), bevorzugt enthaltend Siliziumdioxide, Silikate, Silizium-Nitiride, Metall-Nitride und / oder Gemische davon, aufweist.

10. Fahrzeugverglasung nach einem der Ansprüche 1 bis 9, wobei mindestens eine Beschichtung (6) auf der Fläche A2-p und / oder mindestens eine Beschichtung (7) auf der Koppelfläche A2 des transparenten Körpers (2) eine leitfähige, transparente Beschichtung enthaltend Silber, Zinnoxid, Zinkoxid, Indium-Zinn-Oxid und / oder Gemische davon aufweist.

11. Fahrzeugverglasung nach einem der Ansprüche 1 bis 10, wobei die transparente Scheibe (1) mindestens eine teilweise Beschichtung mit Abdeckfarbe (10) enthält die die Fläche zur Transmission elektromagnetischer Strahlung ganz oder teilweise begrenzt.

12. Fahrzeugverglasung nach einem der Ansprüche 1 bis 11, wobei der transparente Körper (2) in Längs- und / oder Querrichtung, gekrümmt ist.

13. Fahrzeugverglasung nach einem der Ansprüche 1 bis 12, wobei der transparente Körper (2) entsprechend der Krümmung der transparenten Scheibe (1), gekrümmt ist.

14. Verfahren zur Herstellung einer Fahrzeugverglasung, wobei
a) eine transparente Scheibe (1) mit einer Abdeckfarbe (10) teilweise beschichtet wird,
b) ein transparenter Körper (2) und eine auf der Koppelfläche A2 aufgebrachte transparente Polymerschicht (3) vorgewärmt wird,
c) an den transparenten Körper (2) mit der transparenten Polymerschicht (3) unter einer Vakuumglocke Vakuum angelegt wird,
d) der transparente Körper (2) mit der transparenten Polymerschicht (3) auf der transparenten Scheibe (1) an der Beschichtung mit Abdeckfarbe (10) ausgerichtet wird und
e) der transparente Körper (2) mit der transparenten Polymerschicht (3) auf der transparenten Scheibe (1) abrollend aufgeklebt wird.

15. Verfahren zur Herstellung einer transparenten Scheibe nach Anspruch 14, wobei die transparente Scheibe (1) aus zwei transparenten Scheiben in einem Autoklav-Prozess verbunden wird.

16. Verwendung der Fahrzeugverglasung nach einem der Ansprüche 1 bis 13 als Windschutzscheibe für die Transmission von elektromagnetischer Strahlung und für die Montage von Fahrerassistenzsystemen.

## Claims

1. Vehicle glazing, comprising at least:
a) at least one transparent pane (1),
b) one transparent body (2),
c) at least one transparent polymer layer (3) interposed therebetween,
wherein the transparent body (2) is connected in a positively locking fashion to the transparent pane (1) via the transparent polymer layer (3) over at least one coupling surface A2 and the maximum width B2 and the maximum length L2 of the transparent body (2) is smaller than the minimum width B1 and the minimum length L1 of the transparent pane (1) and a transmission surface A2-p of the transparent body (2) and the surface A1 of the transparent pane (1) run parallel to each other with maximum angle deviations of less than 10° and wherein the transparent body (2) contains polycarbonate.

2. Vehicle glazing according to claim 1, wherein the transmission surface A2-p of the transparent body (2) and the surface A1 of the transparent pane (1) run parallel to each other with maximum angle deviations of less than 2°.

3. Vehicle glazing according to claim 1 or 2, wherein the transparent body (2) has a maximum width B2 of 5 mm to 100 mm.

4. Vehicle glazing according to one of claims 1 through 3, wherein the coupling surface A2 and the transmission surface A2-p of the transparent body are trapezoids.

5. Vehicle glazing according to one of claims 1 through 4, wherein the transparent body (2) has a length L2 of 10 mm to 200 mm and/or a thickness D2 of 2 mm to 25 mm.

6. Vehicle glazing according to one of claims 1 through 5, wherein at least one side surface A2-q of the transparent body (2) has a light-absorbing layer (4).

7. Vehicle glazing according to one of claims 1 through 6, wherein the transparent body (2) has light-absorbing parts (5) on at least one side surface and
the light absorbing parts (5) include inclined planes, openings, ridges, and/or threads for the positioning and installation of electromagnetic transmitter or receiving systems.

8. Vehicle glazing according to one of claims 1 through 7, wherein the transparent body (2) has, in a subregion, inclined planes, concave and/or convex curves for the coupling R_e and decoupling R_a of electromagnetic sensor signals on side surfaces A2-q.

9. Vehicle glazing according to one of claims 1 through 8, wherein the transmission surface A2-p of the transparent body (2) has at least one antireflective layer (8), preferably containing silicon dioxides, silicates, silicon nitrides, metal nitrides, and/or mixtures thereof.

10. Vehicle glazing according to one of claims 1 through 9, wherein at least one coating (6) on the surface A2-p and/or at least one coating (7) on the coupling surface A2 of the transparent body (2) has a conductive, transparent coating containing silver, tin oxide, zinc oxide, indium tin oxide, and/or mixtures thereof.

11. Vehicle glazing according to one of claims 1 through 10, wherein the transparent pane (1) includes at least a partial coating with covering paint (10) which completely or partially delimits the surface for the transmission of electromagnetic radiation.

12. Vehicle glazing according to one of claims 1 through 11, wherein the transparent body (2) is curved in the longitudinal direction and/or the transverse direction.

13. Vehicle glazing according to one of claims 1 through 12, wherein the transparent body (2) is curved corresponding to the curvature of the transparent pane (1).

14. Method for producing a vehicle glazing, wherein
a) one transparent pane (1) is partially coated with a covering paint (10),
b) one transparent body (2) and one transparent polymer layer (3) applied on the coupling surface A2 are preheated,
c) vacuum is applied under a vacuum bell to the transparent body (2) with the transparent polymer layer (3),
d) the transparent body (2) with the transparent polymer layer (3) on the transparent pane (1) is aligned on the coating with covering paint (10), and
e) the transparent body (2) with the transparent polymer layer (3) is adhered while unrolled onto the transparent pane (1).

15. Method for producing a transparent pane according to claim 14, wherein the transparent pane (1) is bonded from two transparent panes in an autoclave process.

16. Use of the vehicle glazing according to one of claims 1 through 13 as a windshield for the transmission of electromagnetic radiation and for the installation of driver assistance systems.

## Revendications

1. Vitrage de véhicule, comprenant au moins :
a) au moins une vitre transparente (1) ;
b) un corps transparent (2) ;
c) interposée entre eux au moins une couche de polymère transparente (3),
dans lequel le corps transparent (2) est lié par complémentarité de forme à la vitre transparente (1) par l'intermédiaire de la couche de polymère transparente (3) sur au moins une surface de couplage A2, et la largeur maximale B2 et la longueur maximale L2 du corps transparent (2) sont respectivement plus petites que la largeur minimale B1 et la longueur minimale L1 de la vitre transparente (1), et une surface de transmission A2-p du corps transparent (2) et la surface A1 de la vitre transparente (1) s'étendent parallèlement l'une à l'autre avec des déviations angulaires maximales inférieures à 10°, et dans lequel le corps transparent (2) contient du polycarbonate.

2. Vitrage de véhicule selon la revendication 1, dans lequel la surface de transmission A2-p du corps transparent (2) et la surface A1 de la vitre transparente (1) s'étendent parallèlement avec des déviations angulaires maximales inférieures à 2°.

3. Vitrage de véhicule selon l'une des revendications 1 ou 2, dans lequel le corps transparent (2) présente une largeur maximale B2 de 5 mm à 100 mm.

4. Vitrage de véhicule selon l'une des revendications 1 à 3, dans lequel la surface de couplage A2 et la surface de transmission A2-p du corps transparent sont des trapèzes.

5. Vitrage de véhicule selon l'une des revendications 1 à 4, dans lequel le corps transparent (2) présente une longueur L2 de 10 mm à 200 mm et/ou une épaisseur D2 de 2 mm à 25 mm.

6. Vitrage de véhicule selon l'une des revendications 1 à 5, dans lequel une couche (4) absorbant la lumière est disposée sur au moins une surface latérale A2-q du corps transparent (2).

7. Vitrage de véhicule selon l'une des revendications 1 à 6, dans lequel le corps transparent (2) présente sur au moins une surface latérale des parties (5) absorbant la lumière et les parties (5) absorbant la lumière contiennent des plans inclinés, des ouvertures, des crêtes et/ou des filetages pour le positionnement et l'installation de systèmes d'émission ou de réception électromagnétiques.

8. Vitrage de véhicule selon l'une des revendications 1 à 7, dans lequel le corps transparent (2) présente, dans une sous-région, des plans inclinés, des courbes concaves et/ou convexes pour le couplage R_e et le découplage R_a de signaux de capteurs électromagnétiques sur des surfaces latérales A2-q.

9. Vitrage de véhicule selon l'une des revendications 1 à 8, dans lequel la surface de transmission A2-p du corps transparent (2) présente au moins une couche antiréfléchissante (8), de préférence contenant des dioxydes de silicium, des silicates, des nitrures de silicium, des nitrures métalliques et/ou des mélanges de ceux-ci.

10. Vitrage de véhicule selon l'une des revendications 1 à 9, dans lequel au moins une couche (6) sur la surface A2-p et/ou au moins un revêtement (7) sur la surface de couplage A2 du corps transparent (2) présentent un revêtement transparent, conducteur, contenant de l'argent, de l'oxyde d'étain, de l'oxyde de zinc, un oxyde d'indium et d'étain et/ou des mélanges de ceux-ci.

11. Vitrage de véhicule selon l'une des revendications 1 à 10, dans lequel la vitre transparente (1) contient au moins partiellement un revêtement avec une peinture de recouvrement qui délimite totalement ou partiellement la surface pour la transmission du rayonnement électromagnétique.

12. Vitrage de véhicule selon l'une des revendications 1 à 11, dans lequel le corps transparent (2) est incurvé dans la direction longitudinale et/ou transversale.

13. Vitrage de véhicule selon l'une des revendications 1 à 12, dans lequel le corps transparent (2) est incurvé conformément à la courbure de la vitre transparente (1).

14. Procédé de fabrication d'un vitrage de véhicule, dans lequel
a) on revêt partiellement une vitre transparente (1) par une peinture de recouvrement (10) ;
b) on préchauffe un corps transparent (2) et une couche de polymère transparente (3) appliquée sur la surface de couplage A2 ;
c) on établit un vide sous une cloche à vide sur le corps transparent (2) avec la couche de polymère transparente (3) ;
d) on dispose le corps transparent (2) avec la couche de polymère transparente (3) sur la vitre transparente (1) sur le revêtement avec la peinture de recouvrement (10) ; et
e) on fait adhérer par déroulement le corps transparent (2) avec la couche de polymère transparente (3) sur la vitre transparente (1).

15. Procédé de fabrication d'une vitre transparente, selon la revendication 14, dans lequel la vitre transparente (1) est laminée à partir de deux vitres transparentes dans un procédé en autoclave.

16. Utilisation du vitrage de véhicule selon l'une des revendications 1 à 13 comme pare-brise pour la transmission d'un rayonnement électromagnétique et pour le montage d'un système d'assistance du conducteur.
